(19) Europäisches Patentamt
European Patent Office
Office européen des brevets

(11) EP 1 370 601 B1

(12) **EUROPÄISCHE PATENTSCHRIFT**

(45) Veröffentlichungstag und Bekanntmachung des Hinweises auf die Patenterteilung:
**18.08.2004 Patentblatt 2004/34**

(21) Anmeldenummer: **02704693.7**

(22) Anmeldetag: **07.02.2002**

(51) Int Cl.[7]: **C08G 77/16**, C08G 77/44, C08G 77/50

(86) Internationale Anmeldenummer:
**PCT/EP2002/001287**

(87) Internationale Veröffentlichungsnummer:
**WO 2002/070586 (12.09.2002 Gazette 2002/37)**

(54) **VERFAHREN ZUR HERSTELLUNG VON HYDROXYALKYLPOLYSILOXANEN**
METHOD FOR THE PRODUCTION OF HYDROXYALKYL POLYSILOXANES
PROCEDE DE PRODUCTION D'HYDROXYALKYLPOLYSILOXANES

(84) Benannte Vertragsstaaten:
**BE DE FR GB NL**

(30) Priorität: **01.03.2001 DE 10109842**

(43) Veröffentlichungstag der Anmeldung:
**17.12.2003 Patentblatt 2003/51**

(73) Patentinhaber: **Consortium für elektrochemische Industrie GmbH**
**81379 München (DE)**

(72) Erfinder:
- **SCHÄFER, Oliver**
  **81377 München (DE)**
- **KAMMEL, Thomas**
  **81371 München (DE)**
- **PACHALY, Bernd**
  **84561 Mehring/Öd (DE)**

(74) Vertreter: **Fritz, Helmut, Dr.**
**Wacker-Chemie GmbH,**
**Zentralabteilung Patente,**
**Marken und Lizenzen,**
**Hanns-Seidel-Platz 4**
**81737 München (DE)**

(56) Entgegenhaltungen:
**EP-A- 0 629 648**
**DE-A- 4 216 923**
**GB-A- 1 050 308**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft ein Verfahren zur Herstellung von Hydroxyalkylpolysiloxanen.

Hydroxyalkyl-Polysiloxane und Hydroxyalkyl-Siliconharze werden in vielen Anwendungsbereichen eingesetzt, wie z.B. in der Kosmetik- und Textilindustrie. Die kommerzielle Verwendung dieser Verbindungen in noch größerem Maßstab wird jedoch durch ein relativ umständliches Herstellungsverfahren verhindert. Bekannt ist die direkte Hydrosilylierung von geschützten oder ungeschützten Alkenolen wie z.B. Allylalkohol oder Hexenylalkohol mit alpha, omega-H-Siloxanen. Nachteilig an diesen Verfahren ist entweder die Verwendung relativ teurer Edukte wie z. B. Platinkatalysatoren oder Hexenylalkohol aber auch die bei der Edelmetall-katalysierten Reaktion auftretende Nebenreaktion der Wasserstoff-Abspaltung, die zu hydrolytisch unbeständigen Alkenyloxy-Endgruppen führt, welche hydrolytisch leicht unter Abspaltung von Alkenolen gespalten werden können. Zur Vermeidung dieser Nebenreaktion können die verwendeten Alkohole geschützt werden, jedoch muß die Schutzgruppe in einem weiteren Verfahrensschritt aufwendig entfernt werden.

In EP-A-629648 ist ein weiteres Verfahren beschrieben, welches von speziellen cyclischen Silanen der allgemeinen Formel I ausgeht, welche mit HO-Si-Gruppen (Silanol-Gruppen) am Ende einer Siliconkette ohne die Verwendung von Katalysatoren reagieren können.

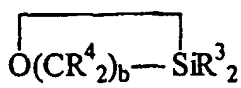

(I)

Dabei ist $R^3$ ein Kohlenstoffrest mit bis zu 20 Kohlenstoffatomen, $R^4$ ist Wasserstoff oder ein Kohlenwasserstoffrest mit bis zu 20 Kohlenstoffatomen. Diese Cyclen können mit Silanol-terminierten Siloxanen der allgemeinen Formel II umgesetzt werden

$$HO(R^1{}_2SiO)_pH \qquad (II)$$

und ergeben carbinol-terminierte Siloxane der allgemeinen Formel III.

$$HO\text{-}(CR^4{}_2)_b\text{-}SiR^3{}_2O(R^1{}_2SiO)_pSiR^3{}_2\text{-}(CR^4_2)_b\text{-}OH \qquad (III)$$

Dabei wird hervorgehoben, daß die Reaktion ohne die Verwendung von Katalysatoren bei Temperaturen zwischen 25 °C und 150 °C ausgeführt wird.

In der Praxis ergeben sich jedoch einige Probleme bei der Durchführung dieser Reaktion. Der 6-gliedrige Ring mit b=4 kann zwar stabil erhalten werden, er erfordert jedoch eine erhöhte Reaktionstemperatur und deutlich verlängerte Reaktionszeiten bei der Reaktion mit Silanol-Endgruppen. Die im Sinne von EP-A-629648 reaktiven 5-Ringe sind zwar prinzipiell einsetzbar, jedoch als Substanz instabil und neigen zur Zersetzung. Das in EP-A-629648 beschriebene Verfahren ist also hinsichtlich einer technischen Durchführung kaum geeignet.

Die Aufgabe der vorliegenden Erfindung besteht daher darin, ein verbessertes Verfahren zur Herstellung von Hydroxyalkylpolysiloxanen zu entwickeln.

Gegenstand der Erfindung ist ein Verfahren zur Herstellung von Hydroxyalkylpolysiloxanen der allgemeinen Formel V

$$(SiO_{4/2})_k(R^1SiO_{3/2})_m(R^1{}_2SiO_{2/2})_p(R^1{}_3SiO_{1/2})_q$$

$$[O_{1/2}SiR^3{}_2\text{-}(CR^4{}_2)_b\text{-}OH]_s[O_{1/2}H]_t \qquad (V),$$

bei dem Silanol-haltige Organosiloxane der allgemeinen Formel VI

$$(SiO_{4/2})_k(R^1SiO_{3/2})_m(R^1{}_2SiO_{2/2})_p(R^1{}_3SiO_{1/2})_q[O_{1/2}H]_r \qquad (VI)$$

mit Verbindungen, die mindestens eine Einheit der allgemeinen Formel IV

$$-[O-(CR^4{}_2)_b-SiR^3{}_2]_n- \qquad (IV)$$

aufweisen, umgesetzt werden, wobei

- **$R^1$, $R^3$, $R^4$** ein Wasserstoffatom oder einen monovalenten gegebenenfalls mit -CN, -NCO, $-NR^x{}_2$, -COOH, $-COOR^x$, -Halogen, -Acryl, -Epoxy, -SH, -OH oder $-CONR^x{}_2$ substituierten $C_1$-$C_{20}$-Kohlenwasserstoffrest oder $C_1$-$C_{15}$-Kohlenwasserstoffoxyrest, in denen jeweils eine oder mehrere, einander nicht benachbarte Methyleneinheiten durch Gruppen -O-, -CO-, -COO-, -OCO-, oder -OCOO-, -S-, oder $-NR^x-$ ersetzt sein können und in denen eine oder mehrere, einander nicht benachbarte Methineinheiten durch Gruppen, -N=,-N=N-,oder -P= ersetzt sein können,
- **$R^x$** Wasserstoff oder einen gegebenenfalls mit -CN oder Halogen substituierten $C_1$-$C_{10}$-Kohlenwasserstoffrest,
- **b** Werte von mindestens 2,
- **s** Werte von mindestens 1,
- **r** Werte von mindestens 1,
- **n** Werte von mindestens 2
- **s + t** den Wert von r und
- **k + m + p + q** Werte von mindestens 2 bedeuten.

Die Erfindung beruht auf der Erkenntnis, daß sich auch lineare Siloxane zur Funktionalisierung von Si-OH-Gruppen eignen. Verwendet man Verbindungen, die Einheiten der allgemeinen Formel IV enthalten, so reagieren diese leicht und gezielt mit guten Ausbeuten mit Silanol-Endgruppen zu Carbinolen. Verbindungen, die Einheiten der allgemeinen Formel IV enthalten, sind stabil und lagerfähig und eignen sich dehalb besonders gut für den Einsatz in industriellem Maßstab.

Die $C_1$-$C_{20}$-Kohlenwasserstoffreste und $C_1$-$C_{20}$-Kohlenwasserstoffoxyreste **$R^1$, $R^3$, $R^4$** können aliphatisch gesättigt oder ungesättigt, aromatisch, geradkettig oder verzweigt sein. **$R^1$, $R^3$, $R^4$** weisen vorzugsweise 1 bis 12 Atome, insbesondere 1 bis 6 Atome, vorzugsweise nur Kohlenstoffatome, oder ein Alkoxysauerstoffatom und sonst nur Kohlenstoffatome auf. Vorzugsweise sind **$R^1$, $R^3$, $R^4$** geradkettige oder verzweigte $C_1$-$C_6$-Alkylreste. Besonders bevorzugt sind die Reste Methyl, Ethyl, Phenyl, Vinyl und Trifluorpropyl.
Bevorzugt werden die Verbindungen der allgemeinen Formel V hergestellt, bei denen **$R^3$** einen Methylrest bedeutet und **$R^4$** Wasserstoff bedeutet. Vorzugsweise weist **b** Werte von höchstens 50, insbesondere höchstens 10 auf. In einer besonders bevorzugten Ausführungsform ist **b** gleich 3.
Das hydroxyfunktionelle Organosiloxan der allgemeinen Formel VI kann linear, cyclisch oder verzweigt sein. Die Summe von **k, m, p, q, s** und **t** ist vorzugsweise eine Zahl von 2 bis 20000, insbesondere 8 bis 1000. Um eine Reaktion zwischen dem Organosiloxan, das Einheiten der allgemeinen Formel IV aufweist, und dem linearen Siloxan zu ermöglichen, muß das Organosiloxan der allgemeinen Formel VI Hydroxy-Gruppen enthalten.

Eine bevorzugte Variante für ein Organosiloxan der allgemeinen Formel VI ist ein lineares Siliconpolymer mit **k** und **m** gleich 0, **p** größer oder gleich 1, **q** gleich 0 oder 1 und r gleich 1 oder 2, wobei die Bedingung **q** gleich 2 minus r gilt. Vorzugsweise ist **r** gleich **s**. Dabei können die bevorzugten Organosiloxan der allgemeinen Formel VI entweder monomodal oder multimodal verteilt sein, gleichzeitig können sie in einer engen oder sehr breiten Verteilung vorliegen.

Eine weitere bevorzugte Variante für ein eingesetztes verzweigtes Organosiloxan der allgemeinen Formel VI ist ein Organosilicon-Harz. Dieses kann aus mehreren Einheiten bestehen, wie in der allgemeinen Formel VI angedeutet ist, wobei die Molprozente der enthaltenen Einheiten durch die Indizes **k, m, p, q, r, s** und **t** bezeichnet werden. Bevorzugt ist ein Wert von 0,1 bis 20 Mol-% an Einheiten **r**, bezogen auf die Summe von **k, m, p, q und r**. Gleichzeitig muß aber auch **k + m** > 0 sein. Bei der Herstellung des m Organosiloxanharzes der allgemeinen Formel V muß **s** > 0 sein und **s + t** gleich **r** sein.

Bevorzugt werden hierbei Harze hergestellt, bei denen 5 % < **k + m** < 90 %, bezogen auf die Summe von **k, m, p, q, s** und **t** ist und vorzugsweise t gleich 0 ist. In einem besonders bevorzugten Fall ist der Rest **$R^3$** ein Methylrest, **$R^1$** ist ein Methylrest und **b** ist gleich 3 und **$R^4$** steht für Wasserstoff.

Vorzugsweise werden als Verbindungen, die mindestens eine Einheit der allgemeinen Formel IV aufweisen, Verbindungen der allgemeinen Formel VII

$$H-[O-(CR^4{}_2)_b-SiR^3{}_2]_n-O-X \qquad (VII),$$

eingesetzt, bei denen

**X** Wasserstoff oder einen gegebenenfalls mit -CN oder Halogen substituierten $C_1$-$C_{10}$-Kohlenwasserstoffrest bedeutet und

**$R^3$, $R^4$, b** und **n** die vorstehenden Bedeutungen aufweisen.

Vorzugsweise bedeutet **X** Wasserstoff oder einen $C_1$-$C_3$-Kohlenwasserstoffrest, insbesondere Methyl oder Ethylrest.

Verbindungen der allgemeinen Formel VII, bei denen **X** Wasserstoff bedeutet, können dimerisieren. Die Dimere reagieren aber in gleicher Weise wie die Monomere mit Organosiloxanen der allgemeinen Formel VI.

Als Halogensubstituenten werden bei den vorstehenden Formeln Fluor, Chlor und Brom bevorzugt.

Das Verfahren kann unkatalysiert bevorzugt bei Temperaturen von 0°C bis 160 °C durchgeführt werden. Bevorzugt werden jedoch Reaktionstemperaturen von mindestens 100 °C verwendet. Das Verfahren kann jedoch noch verbessert werden, indem man bestimmte Katalysatoren zusetzt. Diese Katalysatoren sind saure oder basische Verbindungen und führen dazu, daß sowohl Reaktionszeiten als auch Rektionstemperaturen verringert werden können. Der verwendete Katalysator ist dabei eine anorganische oder organische Lewis-Säure oder Lewis-Base, wie organische Brönstedt Säure oder Base, eine Organometallverbindung oder ein Halogenid-Salz.
Als bevorzugte Säuren werden Carbonsäuren, teilveresterte Carbonsäuren, insbesondere Monocarbonsäuren, vorzugsweise Ameisensäure oder Essigsäure oder unveresterte oder teilveresterte mono- oligo oder Polyphosphorsäuren verwendet. Als bevorzugte Basen kommen vorzugsweise Alkylammoniumhydroxide, Ammoniumalkoxide, Alkylammoniumfluoride oder Aminbasen zum Einsatz. Bevorzugte Organometallreagenzien sind Organo-Zinnverbindungen, Organo-Zinkverbindungen oder Organo-Titanverbindungen. Bevorzugte Salze sind Tetraalkylammoniumfluoride.

Bevorzugt sind Phosphorsäuren der allgemeinen Formel VIII

$$O{=}P(OR^2)_{\mathbf{3\text{-}v}}(OH)_{\mathbf{v}} \qquad \text{(VIII)},$$

in der

**$R^2$** einen gegebenenfalls sustituierten linearen oder verzweigten $C_1$-$C_{30}$-Alkyl-, $C_2$-$C_{40}$-Alkenyl- oder - Alkoxyalkyl-, $C_2$-$C_{40}$-Polyether-, $C_5$-$C_{14}$-Cycloalkyl-oder -Arylrest und

**v** die Werte 0, 1 oder 2 bedeuten.

Die verwendeten Katalysatoren werden nach der Funktionalisierungsreaktion der Silanol-Gruppen vorzugsweise durch Zugabe von sogenannten Anti-Katlysatoren oder Katalysator-Giften deaktiviert, bevor sie zu einer Spaltung der Si-O-Si-Gruppen führen können. Diese Nebenreaktion ist abhängig vom verwendeten Katalysator und muß nicht notwendigerweise eintreten, so daß auf eine Deaktivierung auch verzichtet werden kann. Beispiele für Katalysator-Gifte sind bei der Verwendung von Basen z.B. Säuren und bei der Verwendung von Säure z.B. Basen, was im Endeffekt zu einer einfachen Neutralisationsreaktion führt. Das entsprechende Reaktionsprodukt zwischen Katalysator und Katalysator-Gift kann je nach Verwendung des Produktes entweder aus dem Produkt entfernt werden oder im Produkt verbleiben.
Bei dem Verfahren zur Herstellung von Hydroxyalkylpolysiloxanen der allgemeinen Formel V ist die Menge der eingesetzten Verbindung mit Einheiten der allgemeinen Formel IV abhängig von der Menge **r** der zu funktionalisierenden Silanol-Gruppen im Organosiloxan der allgemeinen Formel VI. Will man jedoch eine vollständige Funktiohalisierung der OH-Gruppen erreichen, so ist die Verbindung mit Einheiten der allgemeinen Formel IV in mindestens äquimolaren Mengen, bezogen auf **n**, zuzugeben. Verwendet man Verbindung mit Einheiten der allgemeinen Formel IV im Überschuß, so kann abreagierte Verbindung im Anschluß entweder thermolytisch gespalten und dann abdestilliert werden oder hydrolysiert und dann, gegebenenfalls, ebenfalls abdestilliert werden.

Will man Harze herstellen, welche nur einen definierten Carbinolgehalt **s + t** haben, so wählt man die stöchiometrischen Verhältnisse zwischen Harz und Verbindung mit Einheiten der allgemeinen Formel IV so, daß der gewünschte Carbinolgehalt erreicht wird. Restliche nicht umgesetzte Si-OH Gruppen können im organofunktionellen Siloxan der allgemeinen Formel V verbleiben oder werden vor oder nach der Umsetzung mit Verbindung mit Einheiten der allgemeinen Formel IV mit beispielsweise Silazanen der nachstehenden allgemeinen Formel IX

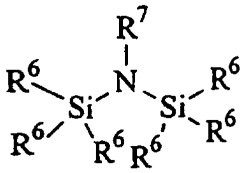

(IX),

umgesetzt, in der

**$R^6$** Wasserstoff oder einen gegebenenfalls mit -CN oder Halogen substituierten $C_1$-$C_{10}$-Kohlenwasserstoffrest und
**$R^7$** einen gegebenenfalls mit -CN oder Halogen substituierten $C_1$-$C_{10}$-Kohlenwasserstoffrest bedeuten.

Vorzugsweise weisen die Kohlenwasserstoffreste **$R^6$** und **$R^7$** 1 bis 5 Kohlenstoffatome auf. Insbesondere bevorzugt sind die Reste Methyl, Ethyl und Vinyl. Bevorzugt als **$R^7$** ist Wasserstoff.

Bevorzugt wird das Verfahren bei 0°C bis 160 °C, besonders bevorzugt bei 40°C bis 100 C durchgeführt. Das Verfahren kann dabei sowohl unter Einbeziehung von Lösungsmitteln durchgeführt werden, oder aber auch ohne die Verwendung von Lösungsmitteln in geeigneten Reaktoren. Dabei wird gegebenenfalls unter Vakuum oder unter Überdruck oder bei Normaldruck (0,1 Mpa) gearbeitet.

Bei der Verwendung von Lösungsmitteln sind inerte, insbesondere aprotische Lösungsmittel wie aliphatische Kohlenwasserstoffe, wie z.B. Heptan oder Decan und aromatische Kohlenwasserstoffe wie z.B. Toluol oder Xylol bevorzugt. Ebenfalls können Ether wie THF, Diethylether oder MTBE verwendet werden. Die Menge des Lösungsmittels sollte ausreichen, um eine ausreichende Homogenisierung der Reaktionsmischung zu gewährleisten. Lösungsmittel oder Lösungsmittelgemische mit einem Siedepunkt bzw. Siedebereich von bis zu 120° C bei 0,1 MPa sind bevorzugt.

Alle vorstehenden Symbole der vorstehenden Formeln weisen ihre Bedeutungen jeweils unabhängig voneinander auf.

In den folgenden Beispielen sind, falls jeweils nicht anders angegeben, alle Mengen- und Prozentangaben auf das Gewicht bezogen, alle Drücke 0,10 MPa (abs.) und alle Temperaturen 20°C. Alle Viskositäten wurden bei 25°C bestimmt.

**Beispiel 1:**

1000 g Me-Siloxan (bishydroxy-terminiertes Polydimethylsiloxan mit einem Mn von 3000 g/mol, bestimmt durch 1H-NMR-Spektroskopie) wurden bei 80 °C mit 79,4 g Poly(1,1-Dimethyl-1-sila-2-oxacyclopentan) mit einer Viskosität von 40 mPas und 100 mg Ameisensäure umgesetzt. $^1$H-NMR und $^{29}$Si-NMR zeigten, daß nach 4 Stunden alle OH-Gruppen zu Hydroxypropyl-Einheiten umgesetzt waren. Anschließend wurden zur Deaktivierung des Katalysators 500 mg Triethylamin zu der Reaktionslösung gegeben und kurz im Vakuum (5 mbar) bei 80 °C destilliert. Zurück blieb reines Bishydroxypropylpolydimethylsiloxan.

**Beispiel 2:**

1000 g Me-Siloxan (bishydroxy-terminiertes Polydimethylsiloxan mit einem Mn von 3000 g/mol, bestimmt durch 1H-NMR-Spektroskopie) wurden bei 80 °C mit 77,6 g Poly(1,1-Dimethyl-1-sila-2-oxacyclopentan) mit einer Viskosität von 40 mPas und 100 mg Ameisensäure umgesetzt. $^1$H-NMR und $^{29}$Si-NMR zeigten, daß nach 4 Stunden keine Si-OH-Gruppen und kein Poly(1,1-Dimethyl-1-sila-2-oxacyclopentan) mehr vorhanden war. Es entstand zu 97 % das gewünschte Produkt Bishydroxypropylpolydimethylsiloxan und zu 3 % ein teilveresterter Ameisensäureproyplhydroxypropyl-polydimethylsiloxan.

**Beispiel 3:**

1000 g Siloxan (bishydroxy-terminiertes Polydimethyl-siloxan mit einem Mn von 28000 g/mol, bestimmt durch OH-Zahl-Bestimmung) wurden bei 80 °C mit 8,4 g Poly(1,1-Dimethyl-1-sila-2-oxacyclopentan) mit einer Viskosität von 40 mPas und 100 mg Arlypon® (teilveresterte Phosphorsäure der Firma Grünau, Illertissen) umgesetzt. $^1$H-NMR und $^{29}$Si-NMR zeigten, daß nach 3 Stunden alle OH-Gruppen zu Hydroxypropyl-Einheiten umgesetzt waren. Anschließend wurden zur Deaktivierung des Katalysators 500 mg Triethylamin zu der Reaktionslösung gegeben und kurz im Vakuum (5 mbar) bei 80 °C destilliert. Zurück blieb reines Bishydroxypropylpolydimethylsiloxan.

**Beispiel 4:**

100 g Me-Siloxan (bishydroxy-terminiertes Polydimethyl-siloxan mit einem Mn von 1000 g/mol, bestimmt durch 1H-NMR-Spektroskopie) wurden bei 80 °C mit 23,4 g Poly(1,1-Dimethyl-1-sila-2-oxacyclopentan) mit einer Viskosität von 40 mPas und 10 mg Arlypon® umgesetzt. $^{1}$H-NMR und $^{29}$Si-NMR zeigten, daß nach 4 Stunden alle OH-Gruppen zu Hydroxypropyl-Einheiten umgesetzt waren. Anschließend wurden zur Deaktivierung des Katalysators 500 mg Triethylamin zu der Reaktionslösung gegeben und kurz im Vakuum (5 mbar) bei 80 °C destilliert. Zurück blieb reines Bishydroxypropylpolydimethylsiloxan.

**Beispiel 5:**

1000 g Siliconöl (bishydroxy-terminiertes Polymethylvinylsiloxan mit einem Vinyl: Methyl -Verhältnis 1 : 4 und einem Mn von 2800 g/mol, bestimmt durch 1H-NMR-Spektroskopie) wurden bei 80 °C mit 83,2 g Poly(1,1-Dimethyl-1-sila-2-oxacyclopentan) mit einer Viskosität von 60 mPas und 100 mg Ameisensäure umgesetzt. $^{1}$H-NMR und $^{29}$Si-NMR zeigten, daß nach 3 Stunden alle OH-Gruppen zu Hydroxypropyl-Einheiten umgesetzt waren. Anschließend wurden zur Deaktivierung des Katalysators 500 mg Triethylamin zu der Reaktionslösung gegeben und kurz im Vakuum (5 mbar) bei 80 °C destilliert. Zurück blieb reines Bishydroxypropylpolydimethylsiloxan.

**Beispiel 6:**

100 g Siliconöl (bishydroxy-terminiertes Polymethyltrifluorpropylsiloxan mit einem Trifluorpropyl: Methyl - Verhältnis von 1 : 1 und mit einem Mn von 900 g/mol, bestimmt durch 1H-NMR-Spektroskopie) wurden bei 80 °C mit 26,0 g Poly(1,1-Dimethyl-1-sila-2-oxacyclopentan) mit einer Viskosität von 60 mPas und 10 mg Ameisensäure umgesetzt. $^{1}$H-NMR und $^{29}$Si-NMR zeigten, daß nach 3 Stunden alle OH-Gruppen zu Hydroxypropyl-Einheiten umgesetzt waren. Anschließend wurden zur Deaktivierung des Katalysators 500 mg Triethylamin zu der Reaktionslösung gegeben und kurz im Vakuum (5 mbar) bei 80 °C destilliert. Zurück blieb reines Bishydroxypropylpolydimethylsiloxan.

**Beispiel 7:**

100 g Monohydroxy-terminiertes Polydimethyl-siloxan mit einem Mn von 3000 g/mol, bestimmt durch 1H-NMR-Spektroskopie) wurden bei 80 °C mit 3,9 g Poly(1,1-Dimethyl-1-sila-2-oxacyclopentan) mit einer Viskosität von 110 mPas und 10 mg Arlypon® (teilveresterte Phosphorsäure der Firma Grünau, Illertissen) umgesetzt. $^{1}$H-NMR und $^{29}$Si-NMR zeigten, daß nach 3 Stunden alle OH-Gruppen zu Hydroxypropyl-Einheiten umgesetzt waren und keine Verbreiterung des Molekulargewichts zu erkennen war.
Anschließend wurden zur Deaktivierung des Katalysators 500 mg Triethylamin zu der Reaktionslösung gegeben und kurz im Vakuum (5 mbar) bei 80 °C destilliert. Zurück blieb reines Monohydroxypropylpolydimethylsiloxan.

**Beispiel 8:**

100 g Monohydroxy-terminiertes Polydimethyl-siloxan mit einem Mn von 3000 g/mol, bestimmt durch 1H-NMR-Spektroskopie) wurden bei 80 °C mit 3,9 g Poly(1,1-Dimethyl-1-sila-2-oxacyclopentan) mit einer Viskosität von 110 mPas und 50 mg Benzyltrimethylammonium-hydroxid (40 %ige Lösung in Methanol) umgesetzt. $^{1}$H-NMR und $^{29}$Si-NMR zeigten, daß nach 4 Stunden alle OH-Gruppen zu Hydroxypropyl-Einheiten umgesetzt waren und keine Verbreiterung des Molekulargewichts zu erkennen war.
Anschließend wurden zur Deaktivierung des Katalysators 500 mg Triethylamin zu der Reaktionslösung gegeben und kurz im Vakuum (5 mbar) bei 80 °C destilliert. Zurück blieb reines Monohydroxypropylpolydimethylsiloxan.

**Patentansprüche**

1. Verfahren zur Herstellung von Hydroxyalkylpolysiloxanen der allgemeinen Formel V

$$(SiO_{4/2})_k(R^1SiO_{3/2})_m(R^1{}_2SiO_{2/2})_p(R^1{}_3SiO_{1/2})_q$$
$$[O_{1/2}SiR^3{}_2\text{-}(CR^4{}_2)_b\text{-}OH]_s[O_{1/2}H]_t \qquad (V),$$

bei dem Silanol-haltige Organosiloxane der allgemeinen Formel VI

$$(SiO_{4/2})_k(R^1SiO_{3/2})_m(R^1{}_2SiO_{2/2})_p(R^1{}_3SiO_{1/2})_q[O_{1/2}H]_r \quad (VI)$$

mit Verbindungen, die mindestens eine Einheit der allgemeinen Formel IV

$$-[O-(CR^4{}_2)_b-SiR^3{}_2]_n- \quad (IV)$$

aufweisen, umgesetzt werden, wobei

**$R^1$, $R^3$, $R^4$** ein Wasserstoffatom oder einen monovalenten gegebenenfalls mit -CN, -NCO, $-NR^x{}_2$, -COOH, $-COOR^x$, -Halogen, -Acryl, -Epoxy, -SH, -OH oder $-CONR^x{}_2$ substituierten $C_1$-$C_{20}$-Kohlenwasserstoffrest oder $C_1$-$C_{15}$-Kohlenwasserstoffoxyrest, in denen jeweils eine oder mehrere, einander nicht benachbarte Methyleneinheiten durch Gruppen -O-, -CO-, -COO-, -OCO-, oder -OCOO-, -S-, oder $-NR^x-$ ersetzt sein können und in denen eine oder mehrere, einander nicht benachbarte Methineinheiten durch Gruppen, -N=,-N=N-,oder -P= ersetzt sein können,
**$R^x$** Wasserstoff oder einen gegebenenfalls mit -CN oder Halogen substituierten $C_1$-$C_{10}$-Kohlenwasserstoffrest,
**b** Werte von mindestens 2,
**s** Werte von mindestens 1,
**r** Werte von mindestens 1,
**n** Werte von mindestens 2
**s + t** den Wert von r und
**k + m + p + q** Werte von mindestens 2 bedeuten.

2. Verfahren nach Anspruch 1, bei dem **$R^1$** die Reste Methyl, Ethyl, Phenyl, Vinyl oder Trifluorpropyl bedeutet.

3. Verfahren nach Anspruch 1 oder 2, bei dem **$R^4$** Wasserstoff bedeutet.

4. Verfahren nach Anspruch 1 bis 3, bei dem **$R^3$** einen Methylrest bedeutet.

5. Verfahren nach Anspruch 1 bis 4, bei dem ein lineares Organosiloxan der allgemeinen Formel VI eingesetzt wird, bei dem **k** und **m** gleich 0, **p** größer oder gleich 1, **q** gleich 0 oder 1 und **r** gleich 1 oder 2.

6. Verfahren nach Anspruch 1 bis 4, bei dem Harze hergestellt werden, bei denen 5 % < **k** + **m** < 90 %, bezogen auf die Summe von **k, m, p, q, s** und **t** ist.

7. Verfahren nach Anspruch 1 bis 6, bei dem die Reaktionstemperatur 0°C bis 160°C beträgt.

8. Verfahren nach Anspruch 1 bis 7, bei dem ein Katalysator eingesetzt wird, der eine anorganische oder organische Lewis-Säure oder Lewis-Base ist.

9. Verfahren nach Anspruch 8, bei dem der Katalysator ausgewählt wird aus Carbonsäuren, teilveresterten Carbonsäuren, unveresterten oder teilveresterten monooligo oder Polyphosphorsäuren, Alkylammoniumhydroxiden, Ammoniumalkoxiden, Alkylammoniumfluoriden und Aminbasen.

## Claims

1. A process for preparing hydroxyalkylpolysiloxanes of the formula V

$$(SiO_{4/2})_k(R^1SiO_{3/2})_m(R^1{}_2SiO_{2/2})_p(R^1{}_3SiO_{1/2})_q$$
$$[O_{1/2}SiR^3{}_2-(CR^4{}_2)_b-OH]_s[O_{1/2}H]_t \quad (V),$$

in which silanol-containing organosiloxanes of the formula VI

$$(SiO_{4/2})_k(R^1SiO_{3/2})_m(R^1{}_2SiO_{2/2})_p(R^1{}_3SiO_{1/2})_q[O_{1/2}H]_r \qquad (VI)$$

are reacted with compounds comprising at least one unit of the formula IV

$$-[O-(CR^4{}_2)_b-SiR^3{}_2)_n- \qquad (IV)$$

where

| | |
|---|---|
| $R^1$, $R^3$, $R^4$ | are each a hydrogen atom or a monovalent $C_1$-$C_{20}$-hydrocarbon radical or $C_1$-$C_{15}$-hydrocarbonoxy radical which may be unsubstituted or substituted by -CN, -NCO, $-NR^x{}_2$, -COOH, $-COOR^x$, halogen, acryl, epoxy, -SH, -OH or $-CONR^x{}_2$, in which one or more nonadjacent methylene units may be replaced by -O-, -CO-, -COO-, -OCO-, or -OCOO-, -S- or $-NR^x-$ groups and in which one or more nonadjacent methine units may be replaced by -N=, -N=N- or -P= groups, |
| $R^x$ | is hydrogen or a $C_1$-$C_{10}$-hydrocarbon radical which may be unsubstituted or substituted by -CN or halogen, |
| b | is at least 2, |
| s | is at least 1, |
| r | is at least 1, |
| n | is at least 2, |
| s + t | = r and |
| k + m + p + q | is at least 2. |

**2.** The process as claimed in claim 1, in which $R^1$ is methyl, ethyl, phenyl, vinyl or trifluoropropyl.

**3.** The process as claimed in claim 1 or 2, in which $R^4$ is hydrogen.

**4.** The process as claimed in any of claims 1 to 3, in which $R^3$ is a methyl radical.

**5.** The process as claimed in any of claims 1 to 4, in which a linear organosiloxane of the formula VI in which k and m are each 0, p is greater or equal to 1, q is 0 or 1 and r is 1 or 2 is used.

**6.** The process as claimed in any of claims 1 to 4, in which resins in which 5% < k + m < 90%, based on the sum of k, m, p, q, s and t, are prepared.

**7.** The process as claimed in any of claims 1 to 6, in which the reaction temperature is from 0°C to 160°C.

**8.** The process as claimed in any of claims 1 to 7, in which a catalyst which is an inorganic or organic Lewis acid or Lewis base is used.

**9.** The process as claimed in claim 8, in which the catalyst is selected from among carboxylic acids, partly esterified carboxylic acids, unesterified and partly esterified monophosphoric, oligophosphoric and polyphosphoric acids, alkylammonium hydroxides, ammonium alkoxides, alkylammonium fluorides and amine bases.

## Revendications

**1.** Procédé de fabrication d'hydroxyalkylpolysiloxanes de formule générale V:

$$(SiO_{4/2})_k(R^1SiO_{3/2})_m(R^1{}_2SiO_{2/2})_p(R^1{}_3SiO_{1/2})_q$$
$$[O_{1/2}SiR^3{}_2-(CR^4{}_2)_b-OH]_s(O_{1/2}H)_t \qquad (V),$$

dans lequel on fait réagir des organosiloxanes contenant des silanols, de formule générale VI

$$(SiO_{4/2})_k(R^1SiO_{3/2})_m(R^1{}_2SiO_{2/2})_p(R^1{}_3SiO_{1/2})_q[O_{1/2}H]_r \quad (VI)$$

avec des composés qui présentent au moins une unité de formule générale IV

$$-[O-(CR^4{}_2)_b-SiR^3{}_2]_n- \quad (IV)$$

dans lesquelles

$R^1$, $R^3$, $R^4$ représentent un atome d' hydrogène, un radical hydrocarbure monovalent en $C_1$ à $C_{20}$ ou hydrocarbure oxydé en $C_1$ à $C_{15}$, éventuellement substitué avec -CN, -NCO, $-NR^x{}_2$, -COOH, $-COOR^x$, un halogène, un groupe acryle, époxy, -SH, -OH ou $-CONR^x{}_2$, dans chacun desquels une ou plusieurs unités méthyle non voisines l'une de l'autre peuvent être remplacées par des groupes -O-, -CO-, - COO-, -OCO-, ou -OCOO-, -S- ou $-NR^x-$ et dans lesquels une ou plusieurs unités méthine, non voisines l'une de l'autre, peuvent être remplacées par des groupes -N=, -N=N- ou -P=,
$R^x$ représente l'hydrogène ou un radical hydrocarbure en $C_1$ à $C_{10}$ éventuellement substitué avec -CN ou un halogène,
b a une valeur d'au moins 2,
s a une valeur d'au moins 1,
r a une valeur d'au moins 1,
n a une valeur d'au moins 2,
s + t a la valeur de r et
k + m + p + q a une valeur d'au moins 2.

**2.** Procédé selon la revendication 1, dans lequel $R^1$ représente un groupe méthyle, éthyle, phényle, vinyle ou trifluoropropyle.

**3.** Procédé selon la revendication 1 ou 2, dans lequel $R^4$ représente l'hydrogène.

**4.** Procédé selon les revendications 1 à 3, dans lequel $R^3$ représente un groupe méthyle.

**5.** Procédé selon les revendications 1 à 4, dans lequel on utilise un organosiloxane linéaire de formule générale VI dans laquelle k et m sont égaux à 0, p est plus grand ou égal à 1, q est égal à 0 ou à 1 et r est égal à 1 ou 2.

**6.** Procédé selon les revendications 1 à 4, dans lequel on prépare des résines pour lesquelles $5\% < k + m < 90\%$ par rapport à la somme de k, m, p, q, s et t.

**7.** Procédé selon les revendications 1 à 6, dans lequel la température de réaction est comprise entre 0°C et 160°C.

**8.** Procédé selon les revendications 1 à 7, dans lequel on utilise un catalyseur qui est un acide de Lewis ou une base de Lewis, l'un et l'autre minéraux ou organiques.

**9.** Procédé selon la revendication 8, dans lequel le catalyseur est sélectionné parmi les acides carboxyliques, les acides carboxyliques partiellement estérifiés, les acides mono, oligo ou polyphosphoriques non estérifiés ou partiellement estérifiés, les hydroxydes d'alkylammonium, les alkoxydes d'ammonium, les fluorures d'alkylammonium et les bases aminées.